(19) Europäisches Patentamt
European Patent Office
Office européen des brevets

(11) **EP 2 992 627 B1**

(12) **EUROPEAN PATENT SPECIFICATION**

(45) Date of publication and mention
of the grant of the patent:
**12.07.2017 Bulletin 2017/28**

(21) Application number: **13722717.9**

(22) Date of filing: **03.05.2013**

(51) Int Cl.:
***H04B 10/293*** (2013.01)   ***H04J 14/02*** (2006.01)

(86) International application number:
**PCT/EP2013/059250**

(87) International publication number:
**WO 2014/177224 (06.11.2014 Gazette 2014/45)**

(54) **METHOD FOR ASSIGNING LAUNCH POWERS TO AN ARRANGEMENT OF PHYSICALLY COUPLED FIBER SPANS**

VERFAHREN ZUR ZUWEISUNG VON ANFANGSLEISTUNGEN ZU EINER ANORDNUNG VON PHYSIKALISCH GEKOPPELTEN FASERÜBERBRÜCKUNGEN

PROCÉDÉ D'ATTRIBUTION DE PUISSANCES DE LANCEMENT À UN AGENCEMENT DE TRONÇONS DE FIBRES COUPLÉS AU PLAN PHYSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2016 Bulletin 2016/10**

(73) Proprietor: **Huawei Technologies Co., Ltd.
Longgang District
Shenzhen, Guangdong 518129 (CN)**

(72) Inventors:
• **GOEGER, Gernot**
  **80992 Munich (DE)**
• **YE, Yabin**
  **80992 Munich (DE)**
• **ZHANG, Sen**
  **80992 Munich (DE)**
• **ZHOU, Enbo**
  **80992 Munich (DE)**

(74) Representative: **Kreuz, Georg Maria
Huawei Technologies Duesseldorf GmbH
Riesstrasse 8
80992 München (DE)**

(56) References cited:
**US-A1- 2004 047 020**

• **P. POGGIOLINI: "ANALYTICAL MODELING OF NON-LINEAR PROPAGATION IN COHERENT SYSTEMS", EUROPEAN CONFERENCE ON OPTICAL COMMUNICATION, ECOC, 20 September 2012 (2012-09-20), XP002719448, cited in the application**
• **G. BOSCO; A. CARENA; R. CIGLIUTTI; V. CURRI; P. POGGIOLINI; F. FORGHIER: "Performance prediction for WDM PM-QPSK transmission over uncompensated links", OFC 2011, OTH07, 2011, XP002719449, cited in the application**

**Description**

TECHNICAL FIELD

The present invention relates to a method for assigning launch powers to an arrangement of physically coupled fiber spans and to an optical transmission device.

In particular, the invention relates to the field of power assignment for individual optical channels transmitted along optical fibers in a way to optimize signal quality usually measured in terms of bit-error-ratio (BER) or effective optical-signal-to-noise-ratio (OSNR) at the receiver side.

BACKGROUND

In transparent optical networks, the optical signal quality is affected by linear impairments like chromatic dispersion (CD), polarization mode dispersion (PMD), amplified spontaneous emission (ASE) noise at optical amplifiers, and nonlinear impairments including self-phase modulation (SPM), cross-phase modulation (XPM), four-wave mixing (FWM), etc. In current coherent systems, CD and PMD can be compensated by digital signal processing, while ASE noise and nonlinear effects cannot be reduced by electronic means. By increasing channel power, the ratio of ASE noise power generated in EDFAs to signal power will be reduced, however, the nonlinear distortions induced by the above-mentioned fiber effects will be enhanced. Therefore, there is a tradeoff between the ASE noise and the nonlinear effects, which corresponds to optimizing the launch power per fiber span.

There exists a well-established description of non-linear impairments for coherently-detected optical channels and transmission over dispersion un-compensated fiber links.

With respect to power setting in optical networks with single fiber type, conventionally the signal launch power on fiber spans is set to a common value for all spans irrespective of their different properties such as attenuation and length. For a single fiber type and equal lengths and attenuation this procedure leads to an optimum performance as soon as a scan of the common power is enabled in combination with a feedback or as a specific optimum launch power has been pre-calculated based on models including modulation format, neighbor channel types and so on. For un-equal span lengths varying the launch power on selected spans, the feedback method suffers from convergence problems getting stuck in local maxima. For coherent uncompensated links, the documents "G. Bosco, A. Carena, R. Cigliutti, V. Curri, P. Poggiolini, F. Forghier: Performance prediction for WDM PM-QPSK transmission over uncompensated links, OFC 2011, OTh07" and "F. Vacondio, C. Simonneau, L. Lorcy, J. C. Antona, A. Bononi, S. Bigo: Experimental characterization of Gaussian-distributed nonlinear distortions, ECOC2011, We.7.B.1" point out that the channel power should be set to make sure the generated nonlinear noise is half of the ASE noise by assuming the same spans. The document "P. Poggiolini: Analytical Modeling of Non-Linear Propagation in Coherent Systems, ECOC2012 Tutorial" describes a method to set optimum launch powers which refers to individual span and fiber properties, but which neglects the interdependence of individual span power settings mediated by the gain dependence of the amplifiers' noise figures.

With respect to power setting in non-uniform span length and/or mixed-fiber optical networks, the most widely used approach consists of employing a specific but common launch power for the respective fiber types derived for the pure fiber systems. Optimization steps to improve margin follow the procedure described above keeping the launch power differences for individual fiber types.

With respect to power setting in meshed optical networks, document "US 2011 /052188, 'Methods and Systems for Optimal Launch Power Computation in Meshed Optical Networks'" describes a method which especially focuses on mesh networks. Their launch powers are initialized with low launch powers and it is checked based on linear impairments evaluation whether the Q value of the signal exceeds a threshold value. In case of yes and if also nonlinear impairments result in a sufficiently high signal quality factor Q, no optimization measures are taken. Else, power variations are proposed which are not related to physical properties of the fiber link but to networking aspects such as lowering power of channels with short target reach.

These approaches, however, do not fully exploit the system's capabilities for maximum reach and best signal quality if the system consists of spans with different properties, e.g. fiber type such as standard single mode fiber (SSMF), large effective area fiber (LEAF), true-wave classic (TWCI) etc, or fiber length, or neighboring channel types and if the properties of amplifiers in between consecutive spans depend on launch power on those spans.

SUMMARY

It is the object of the invention to provide an improved technique for assigning launch powers to an arrangement of physically coupled fiber spans.

This object is achieved by the features of the independent claims. Further implementation forms are apparent from the dependent claims, the description and the figures.

The invention is based on the finding that the problem of finding optimum launch powers in weakly coupled neighbor spans can be solved by two ways. The first one is to decouple the amplifier properties from consecutive span properties. The second one is to initialize the power of each span by an initial span power applying minimum noise figure values and applying an iteration algorithm to find the optimum span powers.

In order to describe the invention in detail, the following terms, abbreviations and notations will be used:

BER: bit-error-ratio,

OSNR: optical-signal-to-noise-ratio,

CD: chromatic dispersion,

PMD: polarization mode dispersion,

ASE: amplified spontaneous emission,

SPM: self-phase modulation,

XPM: cross-phase modulation,

FWM: four-wave mixing,

SSMF: standard single mode fiber,

LEAF: large effective area fiber,

TWCl: true-wave classic,

EDFA: Erbium doped fiber amplifier, an optical amplifier,

NF: noise figure,

fiber span: an optical fiber/cable terminated at both ends which may include devices that add, subtract, or attenuate optical signals.

WDM: wavelength-division multiplexing,

$P_i$: launch power at i-th fiber span.

According to a first aspect, the invention relates to a method for assigning launch powers to an arrangement of physically coupled fiber spans transmitting an optical channel, wherein each fiber span comprises an optical amplifier, the method comprising: decoupling operation of the optical amplifiers from the physical coupling of the fiber spans; and determining for each of the fiber spans a launch power based on physical parameters of the corresponding fiber span; wherein the decoupling comprises: increasing gains ($G_i$) of the optical amplifiers such that noise figures of the optical amplifiers approximate their minimum values; and adjusting output powers on following fiber spans by a plurality of attenuators, each one attached at an output port of a corresponding optical amplifier.

The method provides an improved technique for assigning launch powers to an arrangement of physically coupled fiber spans. The method for span power optimization can be applied in dispersion un-compensated fiber links and can be used for arbitrary combinations of different kinds of fibers with same sign of dispersion coefficient, channel modulation formats, etc. The method provides a simple technique to relate optimum channel launch power with fiber, co-propagating channel type and amplifier properties.

By applying such power values the system margin is maximized and the signal quality is optimized.

In a first possible implementation form of the method according to the first aspect, the launch power of a fiber span is determined as a function of a noise figure of the optical amplifier of the fiber span.

By determining the launch power of a fiber span as a function of the noise figure of the optical amplifier of the fiber span, the fiber spans can be decoupled thereby facilitating computation of the optimum launch powers for each fiber span.

In a second possible implementation form of the method according to the first implementation form of the first aspect, the function of the noise figure is according to: $P_{ch,opt,i} = (NFi,_{min} L_i h \nu / (2 ki))^{1/3}$, where $P_{ch,opt,i}$ denotes the launch power of the i-th fiber span, $NF_{i,min}$ denotes the minimum noise figure of the optical amplifier inserted after span i, set according to claim 2, h denotes the Planck constant, $\nu$ denotes an optical frequency of the optical channel, $L_i$ denotes the loss of fiber span i, $k_i$ denotes a parameter related to fiber type, span number, modulation format and channel number of the fiber span where $k_i$ has been determined by simulations or measurements.

This method can be applied for transparent optical networks. It is also applicable for meshed networks. Actual neighbor channel count and type as well as fiber type are contained in $k_i$.

In a thrid possible implementation form of the method according to the first aspect as such or according to any of the preceding implementation forms of the first aspect, the arrangement of fiber spans comprises at least two fiber spans of a different fiber type, in particular of one of the following fiber types: standard single mode fiber, large effective area fiber, true wave classic fiber, the arrangement of fiber spans comprises at least two fiber spans of non-uniform span length, the optical channel is a WDM channel, the arrangement of fiber spans forms an optical point-to-point network or a meshed network and/or a neighboring optical channel of a different channel type is co-propagated with the optical channel.

The method can be applied to a variety of different arrangements of fiber spans having different fiber types, non-uniform fiber spans, different optical channels and different network topologies.

According to a second aspect, the invention relates to an optical transmission device, comprising: an arrangement of physically coupled dispersion uncompensated fiber spans for transmitting an optical channel, each fiber span comprising an optical amplifier; decoupling means configured to decouple operation of the optical amplifiers from the physical coupling of the fiber spans, wherein the decoupling comprises: increasing gains ($G_i$) of the optical amplifiers such that noise figures of the optical amplifiers approximate their minimum values; and adjusting output powers on following fiber spans by a plurality of attenuators, each one attached at an output port of a corresponding optical amplifier; and controlling means configured for determining for each of the fiber spans a launch power based on physical parameters of the corresponding fiber span.

An optical transmission device according to the second aspect provides an improved technique for assigning launch powers to an arrangement of physically coupled fiber spans. The optical transmission device can be implemented for transmitting an optical channel in dispersion un-compensated fiber links and arbitrary combinations of different kinds of fibers, channel modulation formats, etc. The optical transmission device provides a simple technique to relate optimum channel launch power with fiber, co-propagating channel type and amplifier properties.

According to a third aspect, the invention relates to a method to assign launch powers for WDM channels in optical point-to-point as well as meshed networks, consisting of dispersion un-compensated fiber spans, arbitrary but a-priory known neighbor channel types, in order to optimize signal quality, also under constraints, and maximize margin.

Such method can be applied in dispersion un-compensated fiber links and can be used for arbitrary combinations of different kinds of fibers, channel modulation formats, etc.

The methods, systems and devices described herein may be implemented as software in a Digital Signal Processor (DSP), in a micro-controller or in any other side-processor or as hardware circuit within an application specific integrated circuit (ASIC).

The invention can be implemented in digital electronic circuitry, or in computer hardware, firmware, software, or in combinations thereof, e.g. in available hardware of conventional mobile devices or in new hardware dedicated for processing the methods described herein.

BRIEF DESCRIPTION OF THE DRAWINGS

Further embodiments of the invention will be described with respect to the following figures, in which:

Fig. 1 shows a schematic diagram of a fiber span 100 according to an implementation form;

Fig. 2 shows an exemplary diagram of a noise figure 200 of an optical amplifier 105 applied in a fiber span 100 according to an implementation form;

Fig. 3 shows a schematic diagram of a method 300 for assigning launch powers to an arrangement of physically coupled fiber spans transmitting an optical channel according to an implementation form;

Fig. 4 shows a schematic diagram of a method 400 for assigning launch powers to an arrangement of physically coupled fiber spans transmitting an optical channel according to an implementation form;

Fig. 5 shows a block diagram of an optical transmission device 500 according to an implementation form;

Fig. 6 shows a block diagram of an optical transmission device 600 according to an implementation form;

Fig. 7 shows an exemplary diagram of an iterative algorithm according to an implementation form; and

Figures 8a, 8b and 8c show performance diagrams for different methods of span power setting according to implementation forms.

DETAILED DESCRIPTION OF EMBODIMENTS OF THE INVENTION

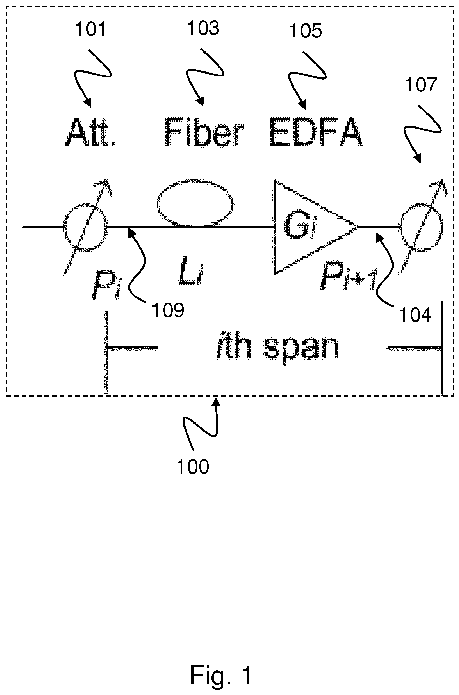

Fig. 1 shows a schematic diagram of a fiber span 100 according to an implementation form.

The fiber span 100 is part of an arrangement of physically coupled fiber spans, where Fig. 1 depicts an i-th fiber span 100 which is arranged subsequent to an i-1 th fiber span. An i+1th fiber span not depicted in Fig. 1 is arranged following the i-th fiber span 100. The fiber span 100 comprises a physical fiber 103 with attenuation $L_i$, an optical amplifier 105, e.g. an Erbium Doped Fiber Amplifier (EDFA) and optionally an attenuator 107. A launch power $P_i$ is launched at an input 109 of the i-th fiber span 100. An optional attenuator 101 of the i-1th fiber span not depicted in Fig. 1 is arranged before the input 109 of the i-th fiber span 100. In an implementation form, the fiber spans comprise attenuators 101, 107. In an alternative implementation form, the fiber spans do not contain attenuators 101, 107.

In uncompensated links, the nonlinear noise can be approximated as Gaussian noise. Then the signal quality depends on the effective OSNR defined as

$$OSNR_{effective} = \frac{P_{ch}}{P_{ASE}^{Trans} + P_{NLI}}$$

$$(1)$$

Where $P_{NLI} = kP_{ch}^3$ is the nonlinear noise and k is a parameter related to fiber types, span numbers, modulation formats, channel numbers, etc. $P_{ASE}^{Trans}$ is the ASE noise.

$$OSNR_{effective} = \frac{P_{ch}^i / L_i \cdot G_i}{P_{NLI} + P_{ASE}} = \frac{P_{ch}^i / L_i \cdot G_i}{k_i (P_{ch}^i)^3 / L_i \cdot G_i + NF_i \cdot G_i \cdot h \cdot v \cdot B}$$

$$\frac{1}{OSNR_{effective}} = k_i (P_{ch}^i)^2 + \frac{NF \cdot L_i \cdot h \cdot v \cdot B}{P_{ch}^i}$$

To have optimum $OSNR_{effective}$ the following equation holds:

$$\left( \frac{1}{k_i (P_{ch}^i)^2 + \frac{NF_i \cdot L_i \cdot h \cdot v \cdot B}{P_{ch}^i}} \right)' = 0$$

Then the optimum channel power for each span is

$$P_{ch}^i = \left( \frac{NF_i \cdot L_i \cdot h \cdot v \cdot B}{2 k_i} \right)^{1/3}$$

$$(2)$$

The noise figure $NF_i$ depends on gain which is monotonously decreasing with gain value in a good approximation, thus the solutions of (2) are weakly depending on precedent and subsequent launch powers. However, for systems with attenuators, the amplifier gain can always be tuned to optimum noise figure while dissipating excessive launch power by a subsequent attenuator. Then optimum launch power for each span can be set individually by using (2).

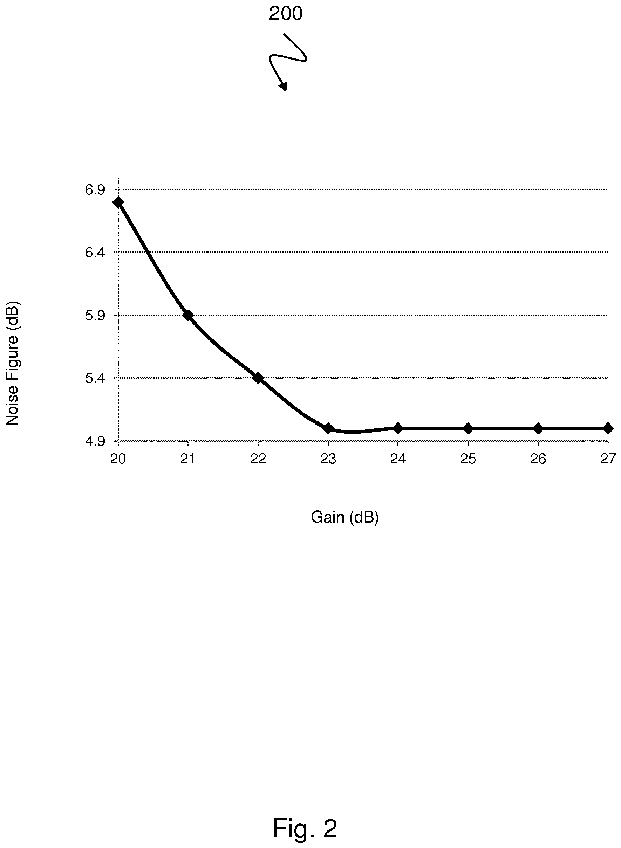

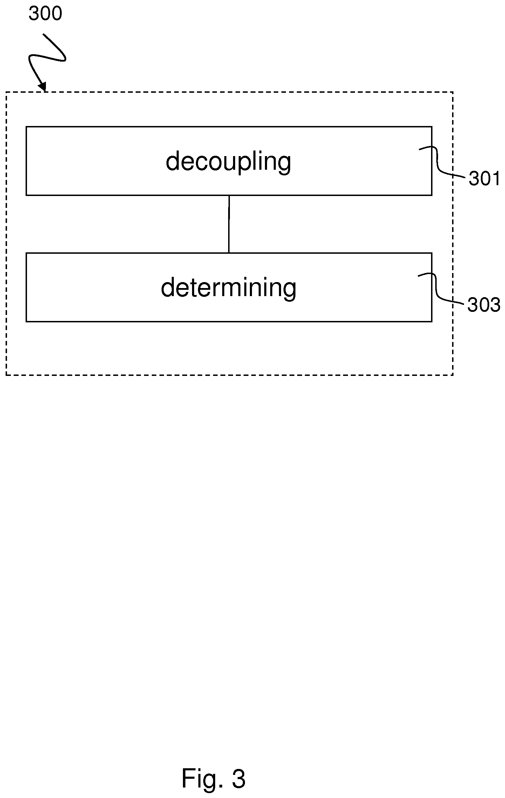

Such a decoupling is a step of the method 300 described below with respect to Fig. 3. The method 300 comprises a de-coupling the amplifier properties from consecutive span properties. In most amplifiers the noise figure decreases with increasing gain, saturating for high gain as depicted in Fig. 2. Therefore, according to an aspect of the invention, the amplifier gain is increased, i.e. to the extent allowed by maximum amplifier output power, etc., thereby yielding minimum noise figure and removing the coupling between subsequent spans. Excessive output power is reduced by the attenuator 107 placed after the amplifier as depicted in Fig. 1. Then the determination of optimum launch power for span i ($P_{opt,i}$) according to the formula (5) described below is possible without solving N (number of spans) coupled nonlinear equations.

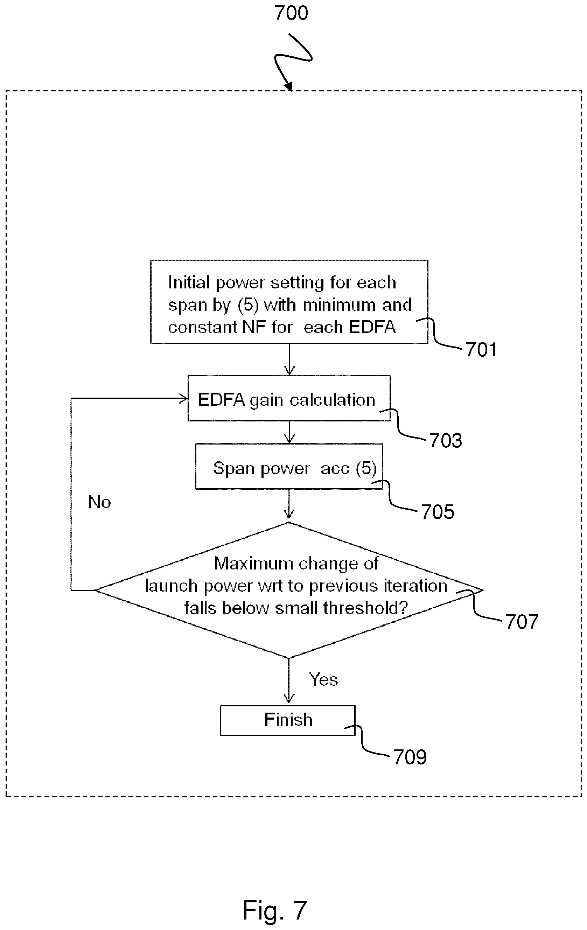

For systems without attenuators 101, 107 as depicted in Fig. 1, the spans 100 are correlated and cannot be considered independently. The previous span power and EDFA gain setting will affect the following spans. The noise figure (NF) of an EDFA is a function of its gain as shown in Fig. 2. If an EDFA is set working at low NF, the gain and the output power may not be the optimum for the following one. In order to get the optimum span power for this scenario, a two-step approach is applied. First, the power of each span is set to an initial value, e.g. according to formula (2) and second, an iteration algorithm is applied to find the final optimum span power. The flow chart of Fig. 7 describes an exemplary implementation of such an iteration algorithm.

Thus, in case attenuators cannot be set, first, the system of equations for optimum launch powers is derived; then an iteration algorithm is applied to find the final optimum span power. The nonlinear noise can be approximated as Gaussian noise. Then the signal quality depends on the effective OSNR defined as

$$OSNR_{effective} = 1/sum_{span\ i=1,N}\ (1/OSNR_{effective,i}) \qquad (3a)$$

$$OSNR_{effective,i} = P_{ch,i}\ /[\ B\ (S_{ASE,i} + S_{NL,i})] \qquad (3b)$$

$$S_{ASE,i} = NF_i\ L_i\ h\ \nu \qquad (4a)$$

$$S_{NLI,i} = k_i\ P_{ch,i}{}^3\ /\ B \qquad (4b)$$

where $S_{NLI,i}$ is the nonlinear noise power spectral density generated on span i, $k_i$ is a parameter related to fiber types, span numbers, modulation formats, channel numbers, etc. $S_{ASE,i}$ is the ASE noise power spectral density added after span i, h is Planck constant, $\nu$ is the optical frequency, $L_i$ is the loss of span i, $NF_i$ is the noise figure of the optical amplifier inserted after span i and B is the optical reference bandwidth for OSNR determination (conventionally 12.5GHz). Variational calculus for equation (3a) with respect to launch powers results in the following set of equations:

$$P_{ch,opt,i} = ((NF_i(P_i,P_{i+1}) - dNF_i(P_i,P_{i+1})\ /dP_i\ P_i)\ L_i\ h\ \nu\ /\ (2\ k_i\ ))^{1/3} \qquad (5)$$

For systems without attenuators, the spans are correlated via the last term and cannot be considered independently. The previous span power and EDFA gain setting will affect the following spans. In order to get the optimum span power for this scenario, a two-step approach is applied. First, the power of each span is initialized according to formula (5) neglecting the interfering last term and applying minimum noise figure value. Second, an iteration algorithm is applied to find the final optimum span power. A flow chart of such an exemplary iteration algorithm is as depicted in Fig. 7. This iteration usually converges fast. Other algorithms such as stochastic or gradient based methods can be applied as well to find the maximum $OSNR_{effective}$ value and related span powers from equation (3a).

Fig. 2 shows an exemplary diagram of a noise figure 200 of an optical amplifier 105 applied in a fiber span 100 according to an implementation form as described above with respect to Fig. 1. The figure illustrates the noise figure (NF) in dB versus gain in dB for a conventional optical amplifier, e.g. an optical amplifier 105 as applied in the fiber span 100 described with respect to Fig. 1.

Fig. 3 shows a schematic diagram of a method 300 for assigning launch powers to an arrangement of physically coupled fiber spans transmitting an optical channel according to an implementation form. The arrangement of physically coupled fiber spans may comprise fiber spans 100 as described above with respect to Fig. 1, in particular such arrangements including attenuators 101, 107.

The method 300 comprises decoupling 301 the operation of the optical amplifiers from the physical coupling of the fiber spans. The method 300 comprises determining 303 for each of the fiber spans a launch power $P_i$ based on physical parameters of the corresponding fiber span.

In an implementation form, the decoupling 301 comprises increasing gains $G_i$ of the optical amplifiers 105 such that noise figures 200 of the optical amplifiers 105 approximate their minimum values; and adjusting output powers on following fiber spans by a plurality of attenuators 107, each one attached at an output port 104 of a corresponding optical amplifier 105. In an implementation form, the launch power $P_i$ of a fiber span 100 is determined as a function of a noise figure 200 of the optical amplifier 105 of the fiber span 100. In an implementation form, the function of the noise figure 200 is according to:

$$P_{ch,opt,i} = (NF_{i,\,min}\ L_i\ h\ \nu\ /\ (2\ k_i))^{1/3},$$

where $P_{ch,opt,i}$ denotes the launch power of the i-th fiber span, $NF_{i,min}$ denotes the minimum noise figure of the optical amplifier inserted after span i, set according to claim 2, h denotes the Planck constant, $\nu$ denotes an optical frequency of the optical channel, $L_i$ denotes the loss of fiber span i, $k_i$ denotes a parameter related to fiber type, span number, modulation format and channel number of the fiber span where $k_i$ has been determined by simulations or measurements.

In an implementation form, the fiber spans 100 of the arrangement of fiber spans 100 are dispersion uncompensated. In an implementation form, the arrangement of fiber spans 100 comprises at least two fiber spans 100 of a different fiber type. In an implementation form, the arrangement of fiber spans 100 comprises at least two fiber spans 100 of one of the following fiber types: standard single mode fiber, large effective area fiber, true wave classic fiber. In an implementation form, the arrangement of fiber spans 100 comprises at least two fiber spans 100 of non-uniform span length. In an implementation form, the optical channel is a WDM channel. In an implementation form, the arrangement of fiber spans 100 forms an optical point-to-point network. In an implementation form, the arrangement of fiber spans 100 forms a meshed network. In an implementation form, a neighboring optical channel of a different channel type is co-propagated with the optical channel.

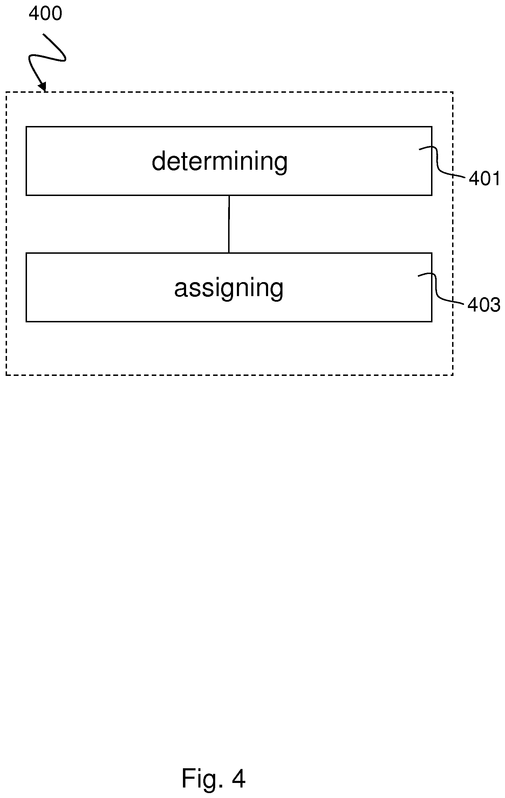

Fig. 4 shows a schematic diagram of a method 400 for assigning launch powers to an arrangement of physically coupled fiber spans transmitting an optical channel according to an implementation form. The arrangement of physically coupled fiber spans may comprise fiber spans 100 as described above with respect to Fig. 1, in particular such arrangements without attenuators 101, 107. The method 400, however, may also be applied to arrangements of fiber spans 100 comprising attenuators 107.

The method 400 comprises determining 401 initial launch powers of the fiber spans based on noise figures of the optical amplifiers. The method 400 comprises assigning 403 launch powers $P_i$ to the fiber spans based on an iterative algorithm of the initial launch powers with respect to the physical coupling of the fiber spans. The iterative algorithm may correspond to an iterative algorithm 700 as described below with respect to Fig. 7.

In an implementation form, the initial launch powers of the fiber spans 100 are determined according to:

$$P_{ch,init,i} = (NF_i(P_i,P_{i+1})\ L_i\ h\ \nu\ /\ (2\ k_i))^{1/3},$$

where $P_{ch,init,i}$ denotes the initial launch power of the i-th fiber span, $NF_i(P_i,P_{i+1})$ denotes the noise figure of the optical amplifier inserted after span i, $L_i$ denotes the loss of fiber span i, h denotes the Planck constant, $\nu$ denotes an optical frequency of the optical channel, $k_i$ denotes a parameter related to fiber type, span number, modulation format and channel number of the fiber span where $k_i$ has been determined by simulations or measurements. In an implementation form, the iterative algorithm is configured to determine the launch power $P_i$ of the i-th fiber span 100 according to:

$$P_{ch,opt,i} = ((NF_i(P_i,P_{i+1})\ -\ dNF_i(P_i,P_{i+1})\ /\ dP_i\ P_i)\ L_i\ h\ \nu\ /\ (2\ k_i))^{1/3},$$

where $P_{ch,opt,i}$ denotes the launch power of the i-th fiber span, $NF_i(P_i,P_{i+1})$ denotes the noise figure of the optical amplifier inserted after span i, $L_i$ denotes the loss of fiber span i, h denotes the Planck constant, $\nu$ denotes an optical frequency of the optical channel, $k_i$ denotes a parameter related to fiber type, span number, modulation format and channel number of the fiber span where $k_i$ has been determined by simulations or measurements. In an implementation form, a stop criterion of the iterative algorithm is based on a change of the launch powers $P_i$ of the iterative algorithm with respect to two subsequent iterations of the iterative algorithm. In an implementation form, the iterative algorithm comprises an optimization criterion for providing optimum values of the launch powers $P_i$ of the fiber spans, the optimization criterion comprising a change of the launch powers $P_i$ of the iterative algorithm falling below a threshold as described below with respect to Fig. 7. In an implementation form, the iterative algorithm 700 comprises the following steps per iteration as described in detail below with respect to Fig. 7:determining 703 gains $G_i$ of the optical amplifiers 105;determining 705 the launch powers $P_i$ of the fiber spans 100;determining 707 a change of the launch powers $P_i$ with respect to a previous iteration of the iterative algorithm; and assigning 709 the launch powers $P_i$ to the fiber spans 100 if the change of the launch powers $P_i$ falls below a threshold.

In an implementation form, the fiber spans 100 of the arrangement of fiber spans 100 are dispersion uncompensated. In an implementation form, the arrangement of fiber spans 100 comprises at least two fiber spans 100 of a different fiber type. In an implementation form, the arrangement of fiber spans 100 comprises at least two fiber spans 100 of one of the following fiber types: standard single mode fiber, large effective area fiber, true wave classic fiber. In an implementation form, the arrangement of fiber spans 100 comprises at least two fiber spans 100 of non-uniform span length. In an implementation form, the optical channel is a WDM channel. In an implementation form, the arrangement of fiber spans 100 forms an optical point-to-point network. In an implementation form, the arrangement of fiber spans 100 forms a meshed network. In an implementation form, a neighboring optical channel of a different channel type is co-propagated with the optical channel.

The method 400 can be implemented according to flow chart depicted in Fig. 7, where parameters for amplifiers, fibers and co-propagating channels can be derived from lab measurements and can be stored in a planning program. In an implementation form of the method 400, the accuracy of the method is further improved by collecting measured data such as individual span loss or spectral noise figure data from the network by the application which determines the optimum span power. In an implementation form, individual span loss is monitored continuously in the network. In an implementation form, spectral noise figure data are stored in actual installed optical amplifier cards.

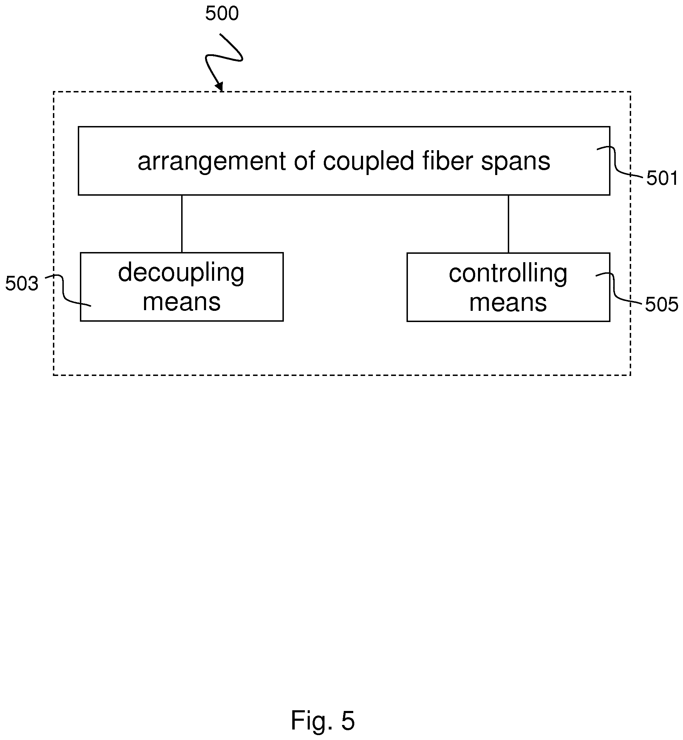

Fig. 5 shows a block diagram of an optical transmission device 500 according to an implementation form. The optical transmission device 500 comprises an arrangement 501 of physically coupled dispersion uncompensated fiber spans for transmitting an optical channel, each fiber span comprising an optical amplifier. The fiber span may correspond to a fiber span 100 as described with respect to Fig. 1, in particular a fiber span 100 comprising an attenuator 107. The optical transmission device 500 comprises decoupling means 503 configured to decouple operation of the optical amplifiers from the physical coupling of the fiber spans 100. The decoupling means 503 may correspond to the attenuator 107 as described above with respect to Fig. 1. The optical transmission device 500 further comprises controlling means 505 configured for determining for each of the fiber spans a launch power $P_i$ based on physical parameters of the corresponding fiber span. The controlling means 505 may comprise a processor or a microcontroller or a digital signal processor or another hardware or software circuit. The controlling means 505 may be used for switching the attenuators 107 into the fiber spans 100 and for controlling the optical amplifiers 105 with respect to operating at minimum noise figure. The optical transmission device 500 is configured to implement the method 300 as described above with respect to Fig. 3.

In an implementation form, the decoupling means 503 is configured to increase gains $G_i$ of the optical amplifiers 105 such that noise figures 200 of the optical amplifiers 105 approximate their minimum values and is configured to adjust output powers on following fiber spans by a plurality of attenuators 107, each one attached at an output port 104 of a corresponding optical amplifier 105. In an implementation form, the launch power $P_i$ of a fiber span 100 is determined as a function of a noise figure 200 of the optical amplifier 105 of the fiber span 100. In an implementation form, the function of the noise figure 200 is according to: $P_{ch,opt,i} = (NF_{i,\,min} L_i h \nu / (2 k_i))^{1/3}$, as described above with respect to Fig. 3. In an implementation form, the fiber spans 100 of the arrangement of fiber spans 100 are dispersion uncompensated. In an implementation form, the arrangement of fiber spans 100 comprises at least two fiber spans 100 of a different fiber type. In an implementation form, the arrangement of fiber spans 100 comprises at least two fiber spans 100 of one of the following fiber types: standard single mode fiber, large effective area fiber, true wave classic fiber. In an implementation form, the arrangement of fiber spans 100 comprises at least two fiber spans 100 of non-uniform span length. In an implementation form, the optical channel is a WDM channel. In an implementation form, the arrangement of fiber spans 100 forms an optical point-to-point network. In an implementation form, the arrangement of fiber spans 100 forms a meshed network. In an implementation form, a neighboring optical channel of a different channel type is co-propagated with the optical channel.

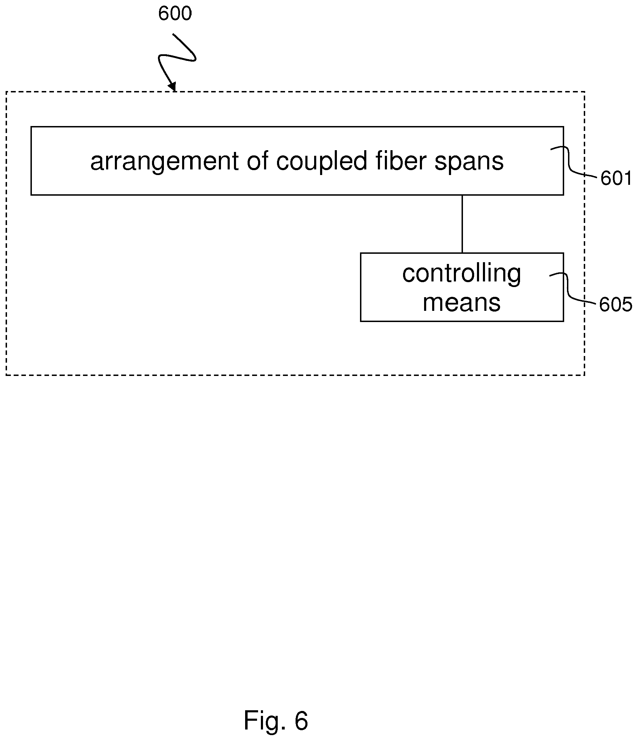

Fig. 6 shows a block diagram of an optical transmission device 600 according to an implementation form. The optical transmission device 600 comprises an arrangement 601 of physically coupled dispersion uncompensated fiber spans for transmitting an optical channel, each fiber span comprising an optical amplifier for transmitting an optical channel. The fiber span may correspond to a fiber span 100 as described with respect to Fig. 1, in particular a fiber span 100 without attenuator 107. The fiber span, however, may also correspond to a fiber span 100 comprising an attenuator 107. The optical transmission device 600 comprises controlling means 605 configured for determining initial launch powers of the fiber spans based on noise figures of the optical amplifiers and configured for assigning launch powers $P_i$ to the fiber spans based on an iterative algorithm of the initial launch powers with respect to the physical coupling of the fiber spans. The controlling means 605 may comprise a processor or a microcontroller or a digital signal processor or another hardware or software circuit. The optical transmission device 600 is configured to implement the method 400 as described above with respect to Fig. 4.

In an implementation form, the controlling means 605 is configured for determining 401 initial launch powers of the fiber spans based on noise figures of the optical amplifiers. In an implementation form, the controlling means 605 is configured for assigning launch powers $P_i$ to the fiber spans based on an iterative algorithm of the initial launch powers with respect to the physical coupling of the fiber spans. The iterative algorithm may correspond to an iterative algorithm 700 as described below with respect to Fig. 7. In an implementation form, the initial launch powers of the fiber spans 100 are determined according to: $P_{ch,init,i} = (NF_i(P_i,P_{i+1}) L_i h \nu / (2 k_i))^{1/3}$, as described with respect to Fig. 4. In an implementation form, the iterative algorithm is configured to determine the launch power $P_i$ of the i-th fiber span 100 according to: $P_{ch,opt,i} = ((NF_i(P_i,P_{i+1}) - dNF_i(P_i,P_{i+1}) / dP_i P_i) L_i h \nu / (2 k_i))^{1/3}$, as described above with respect to Fig. 4. In an implementation form, a stop criterion of the iterative algorithm is based on a change of the launch powers $P_i$ of the iterative algorithm with respect to two subsequent iterations of the iterative algorithm. In an implementation form, the iterative algorithm comprises an optimization criterion for providing optimum values of the launch powers $P_i$ of the fiber spans, the optimization criterion comprising a change of the launch powers $P_i$ of the iterative algorithm falling below a threshold as described below with respect to Fig. 7. In an implementation form, the iterative algorithm 700 comprises the following steps per iteration as described in detail below with respect to Fig. 7: determining 703 gains $G_i$ of the optical amplifiers 105; determining 705 the launch powers $P_i$ of the fiber spans 100; determining 707 a change of the launch powers $P_i$ with respect to a previous iteration of the iterative algorithm; and assigning 709 the launch powers $P_i$ to the fiber spans 100 if the change of the launch powers $P_i$ falls below a threshold.

In an implementation form, the fiber spans 100 of the arrangement of fiber spans 100 are dispersion uncompensated. In an implementation form, the arrangement of fiber spans 100 comprises at least two fiber spans 100 of a different fiber type. In an implementation form, the arrangement of fiber spans 100 comprises at least two fiber spans 100 of one of the following fiber types: standard single mode fiber, large effective area fiber, true wave classic fiber. In an implementation form, the arrangement of fiber spans 100 comprises at least two fiber spans 100 of non-uniform span length. In an implementation form, the optical channel is a WDM channel. In an implementation form, the arrangement of fiber spans 100 forms an optical point-to-point network. In an implementation form, the arrangement of fiber spans 100 forms a meshed network. In an implementation form, a neighboring optical channel of a different channel type is co-propagated with the optical channel.

Fig. 7 shows an exemplary diagram of an iterative algorithm 700 according to an implementation form. The iterative algorithm can be applied by a method 400 as described above with respect to Fig. 4 and/or by a transmission device 600 as described above with respect to Fig. 6.

The iterative algorithm 700 comprises an initial power setting 701 for each fiber span 100. The initial power setting may apply equation (5) as described above with respect to Fig. 1 for the power setting, e.g. with minimum and constant noise figure for each optical amplifier 105, e.g. of the EDFA type. The iterative algorithm 700 comprises the following steps per iteration: determining 703 gains $G_i$ of the optical amplifiers 105 (denoted as EDFA gain calculation in Fig. 7); determining 705 the launch powers $P_i$ of the fiber spans 100, e.g. by applying equation (5) as described above with respect to Fig. 1; determining 707 a change of the launch powers $P_i$ with respect to a previous iteration of the iterative algorithm; and assigning 709 the launch powers $P_i$ to the fiber spans 100 if the change of the launch powers $P_i$ falls below a threshold. The determining 703 gains follows the initial power setting 701; the determining 705 the launch powers follows the determining 703 gains; the determining 707 a change of the launch powers follows the determining 705 the launch powers. If the change of the launch powers is above a threshold, the next iteration is started by jumping to the step determining 703 gains. If the change of the launch powers is below the threshold, the stop criterion is reached and the algorithm is finished by assigning 709 the launch powers $P_i$ to the fiber spans 100.

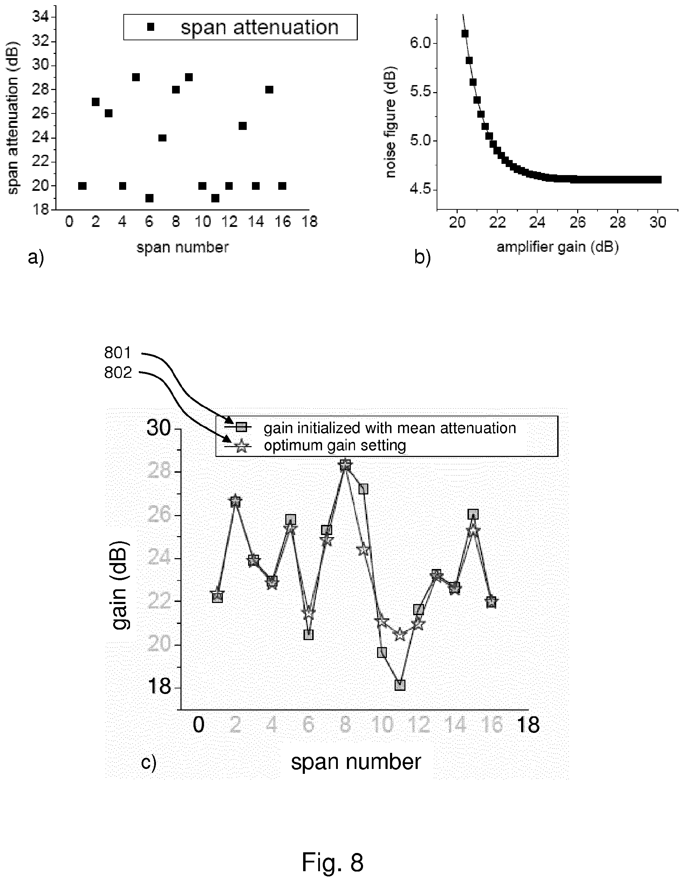

Figures 8a, 8b and 8c show performance diagrams for different methods of span power setting according to implementation forms. Fig. 8a shows a 16 span system with span attenuation as depicted in Fig. 8a. Fig. 8b shows a gain dependent noise figure. A constant nonlinear parameter $k_i$ is applied for all fiber spans i. Fig. 8c shows the results of a method 400 as depicted in Fig. 4 applying an iterative algorithm as depicted in Fig. 7. Fig. 8c shows the gain in dB versus the span number for a first curve 801 and a second curve 802. The first curve 801 illustrates the gain initialized with mean attenuation for a non-iterated method as described by "F. Vacondio, C. Simonneau, L. Lorcy, J. C. Antona, A. Bononi, S. Bigo: Experimental characterization of Gaussian-distributed nonlinear distortions, ECOC2011, We.7.B.1" where gain is initialized with average attenuation of preceding and subsequent span. The second curve 802 illustrates an optimum gain setting by applying the iterative method 400 as described with respect to Fig. 4. Such method 400 using the iterative algorithm 700 yields an improvement in effective OSNR of 0.7dB with respect to a conventional optimum mean power algorithm and 1.4dB compared with the non-iterated method.

Due to the extreme value condition for the solution of equation (3a) the system's tolerance with respect to power fluctuations and deviations from optimum values is enlarged. This method can be applied in any uncompensated transmission link. The fiber type, the neighbor channel count, the neighbor channel modulation format etc. are contained in specific values for the parameter $k_i$.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims and their equivalents, the inventions may be practiced otherwise than as specifically described herein.

**Claims**

1.  Method (300) for assigning launch powers ($P_i$) to an arrangement of physically coupled dispersion uncompensated fiber spans (100) transmitting an optical channel, wherein each fiber span (100) comprises an optical amplifier (105), the method (300) comprising:

    decoupling (301) operation of the optical amplifiers (105) from the physical coupling of the fiber spans (100); and
    determining (303) for each of the fiber spans (100) a launch power ($P_i$) based on physical parameters of the corresponding fiber span (100), wherein the decoupling (301) comprises:

    increasing gains ($G_i$) of the optical amplifiers (105) such that noise figures (200) of the optical amplifiers (105) approximate their minimum values; and
    adjusting output powers on following fiber spans by a plurality of attenuators (107), each one attached at an output port (104) of a corresponding optical amplifier (105).

2.  The method (300) of claim 1, wherein the launch power ($P_i$) of a fiber span (100) is determined as a function of a noise figure (200) of the optical amplifier (105) of the fiber span (100).

3.  The method (300) of claim 2, wherein the function of the noise figure (200) is according to:

$$P_{ch,opt,i} = \left( NF_{i,\,min}\, L_i\, h\, \nu\, /\, (2\, k_i)\, \right)^{1/3},$$

    where $P_{ch,opt,i}$ denotes the launch power of the i-th fiber span, $NF_{i,min}$ denotes the minimum noise figure of the optical amplifier inserted after span i, set according to claim 2, h denotes the Planck constant, $\nu$ denotes an optical frequency of the optical channel, $L_i$ denotes the loss of fiber span i, $k_i$ denotes a parameter related to fiber type, span number, modulation format and channel number of the fiber span where $k_i$ has been determined by simulations or measurements.

4.  Optical transmission device (500), comprising:

    an arrangement (501) of physically coupled dispersion uncompensated fiber spans (100) for transmitting an optical channel, each fiber span (100) comprising an optical amplifier (105);
    decoupling means (503) configured to decouple operation of the optical amplifiers (105) from the physical coupling of the fiber spans (100), wherein the decoupling means is adapted to increase gains ($G_i$) of the optical amplifiers (105) such that noise figures (200) of the optical amplifiers (105) approximate their minimum values; and to adjust output powers on following fiber spans by a plurality of attenuators (107), each one attached at an output port (104) of a corresponding optical amplifier (105); and
    controlling means (505) configured for determining for each of the fiber spans (100) a launch power ($P_i$) based on physical parameters of the corresponding fiber span (100).

**Patentansprüche**

1.  Verfahren (300) zur Zuweisung von Anfangsleistung ($P_i$) zu einer Anordnung von physikalisch gekoppelten, nicht dispersionskompensierten Glasfaserüberbrückungen (100), über die ein optischer Kanal übertragen wird, wobei jede Glasfaserüberbrückung (100) einen optischen Verstärker (105) umfasst, wobei das Verfahren (300) umfasst:

    Entkoppeln (301) des Betriebs der optischen Verstärker (105) von der physikalischen Kopplung der Glasfaserüberbrückungen (100); und
    Bestimmen (303), für jede der Glasfaserüberbrückungen (100), einer Anfangsleistung ($P_i$) basierend auf physikalischen Parametern der entsprechenden Glasfaserüberbrückung (100), wobei das Entkoppeln (301) umfasst:

    Erhöhen der Verstärkungen ($G_i$) der optischen Verstärker (105) derart, dass sich die Rauschzahlen (200) der optischen Verstärker (105) ihren Minimalwerten annähern; und
    Anpassen der Ausgangsleistungen auf nachfolgenden Glasfaserüberbrückungen durch mehrere Dämpfungselemente (107), die jeweils einzeln an einem Ausgangsport (104) eines entsprechenden optischen Verstärkers (105) angebracht sind.

2.  Verfahren (300) nach Anspruch 1, wobei die Anfangsleistung ($P_i$) einer Glasfaserüberbrückung (100) bestimmt wird als Funktion einer Rauschzahl (200) des optischen Verstärkers (105) der Glasfaserüberbrückung (100).

3.  Verfahren (300) nach Anspruch 2, wobei die Funktion der Rauschzahl (200) folgender Gleichung entspricht:

$$P_{ch,opt,i} = ( NF_{i,min} L_i h \nu / (2 k_i) )^{1/3},$$

    wobei $P_{ch,opt,i}$ für die Anfangsleistung der i-ten Glasfaserüberbrückung steht, $NF_{i,min}$ für die minimale Rauschzahl des optischen Verstärkers steht, der nach Überbrückung i eingefügt ist, eingestellt gemäß Anspruch 2, h für die Planck-Konstante steht, $\nu$ für eine optische Frequenz des optischen Kanals steht, $L_i$ für den Verlust der Glasfaserüberbrückung i steht, $k_i$ für einen Parameter bezogen auf Glasfasertyp, Nummer der Überbrückung, Modulationsformat und Kanalnummer der Glasfaserüberbrückung steht, wobei $k_i$ durch Simulationen oder Messungen bestimmt wurde.

4.  Optische Übertragungsvorrichtung (500), umfassend:

    eine Anordnung (501) von physikalisch gekoppelten, nicht dispersionskompensierten Glasfaserüberbrückungen (100), über die ein optischer Kanal übertragen wird, wobei jede Glasfaserüberbrückung (100) einen optischen Verstärker (105) umfasst;
    Entkopplungsmittel (503), das ausgelegt ist zum Entkoppeln des Betriebs der optischen Verstärker (105) von der physikalischen Kopplung der Glasfaserüberbrückungen (100), wobei das Entkopplungsmittel ausgelegt ist zum Erhöhen der Verstärkungen ($G_i$) der optischen Verstärker (105) derart, dass sich die Rauschzahlen (200) der optischen Verstärker (105) ihren Minimalwerten annähern; und
    Anpassen der Ausgangsleistungen auf nachfolgenden Glasfaserüberbrückungen durch mehrere Dämpfungselemente (107), die jeweils einzeln an einem Ausgangsport (104) eines entsprechenden optischen Verstärkers (105) angebracht sind; und
    Steuermittel (505), das ausgelegt ist zum Bestimmen, für jede der Glasfaserüberbrückungen (100), einer Anfangsleistung ($P_i$) basierend auf physikalischen Parametern der entsprechenden Glasfaserüberbrückung (100).

**Revendications**

1.  Procédé (300) pour attribuer des puissances de lancement ($P_i$) à un système de faisceaux de fibres sans compensation de dispersion couplés physiquement (100) transmettant un canal optique, dans lequel chaque faisceau de fibres (100) comprend un amplificateur optique (105), lequel procédé (300) comprend :

    une opération de découplage (301) des amplificateurs optiques (105) du couplage physique des faisceaux de fibres (100) ; et

déterminer (303) pour chacun des faisceaux de fibres (100) une puissance de lancement ($P_i$) en fonction de paramètres physiques du faisceau de fibres correspondant (100) ; dans lequel le découplage (301) consiste à :

augmenter les gains ($G_i$) des amplificateurs optiques (105) de sorte que les chiffres de bruit (200) des amplificateurs optiques (105) soient proches de leurs valeurs minimales ; et

ajuster les puissances de sortie sur les faisceaux de fibres suivants à l'aide de plusieurs atténuateurs (107) qui sont chacun attachés à un port de sortie (104) d'un amplificateur optique correspondant (105).

2. Procédé (300) selon la revendication 1, dans lequel la puissance de lancement ($P_i$) d'un faisceau de fibres (100) est déterminée en fonction d'un chiffre de bruit (200) de l'amplificateur optique (105) du faisceau de fibres (100).

3. Procédé (300) selon la revendication 2, dans lequel la fonction du chiffre de bruit (200) correspond à :

$$P_{ch,opt,i} = (NF_{i,min} \, L_i \, h \, \nu \, / \, (2k_i))^{1/3} \, ,$$

où $P_{ch,opt,i}$ représente la puissance de lancement du ième faisceau de fibres, $NF_{i,min}$ représente le chiffre de bruit minimal de l'amplificateur optique inséré après le faisceau i, défini selon la revendication 2, h représente la constante de Planck, $\nu$ représente une fréquence optique du canal optique, $L_i$ représente la perte du faisceau de fibres i, $k_i$ représente un paramètre lié au type de fibre, au nombre de faisceaux, à un format de modulation et au nombre de canaux du faisceau de fibres, $k_i$ ayant été déterminé par des simulations ou des mesures.

4. Dispositif de transmission optique (500) comprenant :

un système (501) de faisceaux de fibres sans compensation de dispersion couplés physiquement (100) pour transmettre un canal optique, chaque faisceau de fibres (100) comprenant un amplificateur optique (105) ;

des moyens de découplage (503) conçus pour effectuer une opération de découplage des amplificateurs optiques (105) du couplage physique des faisceaux de fibres (100), lesquels moyens de découplage sont conçus pour :

augmenter les gains ($G_i$) des amplificateurs optiques (105) de sorte que les chiffres de bruit (200) des amplificateurs optiques (105) soient proches de leurs valeurs minimales ; et

ajuster les puissances de sortie sur les faisceaux de fibres suivants à l'aide de plusieurs atténuateurs (107) qui sont chacun attachés à un port de sortie (104) d'un amplificateur optique correspondant (105) ; et

des moyens de commande (505) conçus pour déterminer pour chacun des faisceaux de fibres (100) une puissance de lancement ($P_i$) en fonction de paramètres physiques du faisceau de fibres correspondant (100).

101 103 105 107

Att. Fiber EDFA

$G_i$

$P_i$ $L_i$ $P_{i+1}$

109 104

ith span

100

Fig. 1

Fig. 2

300

decoupling — 301

determining — 303

Fig. 3

400

determining ——401

assigning ——403

Fig. 4

500

arrangement of coupled fiber spans —501

503— decoupling means    controlling means —505

Fig. 5

600

arrangement of coupled fiber spans — 601

controlling means — 605

Fig. 6

700

Initial power setting for each
span by (5) with minimum and
constant NF for each EDFA
⌐701

EDFA gain calculation
⌐703

Span power acc (5)
⌐705

No

Maximum change of
launch power wrt to previous iteration
falls below small threshold?
⌐707

Yes

Finish
⌐709

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011052188 A

### Non-patent literature cited in the description

- **G. BOSCO ; A. CARENA ; R. CIGLIUTTI ; V. CURRI ; P. POGGIOLINI ; F. FORGHIER.** Performance prediction for WDM PM-QPSK transmission over uncompensated links. *OFC 2011, OTh07*

- **F. VACONDIO ; C. SIMONNEAU ; L. LORCY ; J. C. ANTONA ; A. BONONI ; S. BIGO.** Experimental characterization of Gaussian-distributed nonlinear distortions. *ECOC2011, We.7.B.1*
- **P. POGGIOLINI.** Analytical Modeling of Non-Linear Propagation in Coherent Systems. *ECOC2012 Tutorial*